(19) Europäisches Patentamt
European Patent Office
Office européen des brevets

(11) **EP 3 063 429 B1**

(12) **FASCICULE DE BREVET EUROPEEN**

(45) Date de publication et mention
de la délivrance du brevet:
**18.10.2017 Bulletin 2017/42**

(21) Numéro de dépôt: **14825375.0**

(22) Date de dépôt: **23.10.2014**

(51) Int Cl.:
***F16F 3/12*** *(2006.01)*

(86) Numéro de dépôt international:
**PCT/FR2014/052702**

(87) Numéro de publication internationale:
**WO 2015/063397 (07.05.2015 Gazette 2015/18)**

(54) **MODULE D'ISOLATION DE VIBRATIONS À EFFETS NON LINÉAIRES DIMINUÉS**

MODUL ZUR SCHWINGUNGSISOLIERUNG MIT VERRINGERTEN NICHTLINEAREN EFFEKTEN

VIBRATION ISOLATION MODULE HAVING REDUCED NONLINEAR EFFECTS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **31.10.2013 FR 1360667**

(43) Date de publication de la demande:
**07.09.2016 Bulletin 2016/36**

(73) Titulaire: **Airbus Defence and Space SAS
78130 Les Mureaux (FR)**

(72) Inventeurs:
• **CAMARASA, Patrick
F-31320 Rebigue (FR)**
• **DHIEUX, Emmanuel
F-31500 Toulouse (FR)**

(74) Mandataire: **Cabinet Plasseraud
66, rue de la Chaussée d'Antin
75440 Paris Cedex 09 (FR)**

(56) Documents cités:
FR-A- 1 448 996        FR-A1- 2 895 052
US-A1- 2003 006 341

**Description**

L'invention concerne un module d'isolation destiné à être monté entre un dispositif générant des vibrations et une structure à isoler. Plus particulièrement, l'invention concerne un tel module d'isolation destiné à être monté entre un lanceur de satellite et un satellite. Le terme isolation doit être compris au sens d'au moins une réduction de l'amplitude des vibrations par le module entre la source de vibrations d'une part, c'est-à-dire le dispositif générant des vibrations, et la structure à isoler d'autre part. Ainsi, dans certains cas, le module d'isolation doit également permettre d'atténuer des chocs.

Dans le domaine des satellites, l'isolation entre le satellite et le lanceur revêt une importance majeure. Ainsi, afin d'éviter que les vibrations générées par le lanceur ne soient transmises à la structure du satellite et par là aux équipements portés par le satellite, il est connu de placer des moyens d'isolation entre le satellite et le lanceur. Les moyens d'isolation doivent pouvoir être efficaces sur une large gamme de fréquences et présenter une tenue mécanique suffisante pour assurer la fixation et la bonne tenue mécanique du satellite sur le lanceur.

Plus précisément, le lanceur comprend un anneau d'interface satellite et le satellite comprend un anneau d'interface lanceur. Les anneaux d'interface sont reliés l'un à l'autre par des moyens d'isolation, par exemple des modules d'isolation.

Il est connu d'employer des moyens d'isolation incluant des éléments en matière viscoélastique.

Cependant, un problème rencontré fréquemment est le comportement non-linéaire des moyens d'isolation dû en particulier à la nature viscoélastique du matériau employé. Or, la non-linéarité limite le pouvoir de prédiction du comportement des moyens d'isolation. Ainsi, des changements de taille, de poids et de géométrie du lanceur et du satellite nécessitent de revoir la conception des moyens d'isolation : celle-ci est mise au point au cas par cas. En outre, des événements imprévus générant des vibrations et des chocs pendant la phase de lancement du satellite peuvent avoir des effets négatifs sur le contrôle du lanceur et du satellite dus en partie au comportement imprévisible des moyens d'isolation.

Par conséquent, l'emploi d'éléments en matière viscoélastique dans le domaine particulier des satellites est limité.

Il a donc été proposé des nouvelles conceptions de moyens d'isolation diminuant le comportement non-linéaire afin d'obtenir des moyens d'isolation efficaces pour différents types de lanceurs et de satellites et dont le comportement est prévisible.

Le document US 6,199,801 décrit un exemple d'un dispositif d'isolation, sous forme d'un module. Une pluralité de modules est placée entre le lanceur et le satellite pour assurer leur connexion. Un module se comporte comme un ressort dans une direction verticale, mais est relativement rigide dans les directions latérales. Par exemple, un module se présente sous la forme de deux poutres métalliques, une couche amortissant en matériau viscoélastique étant appliquée sur chaque poutre. Les deux poutres sont reliées l'une à l'autre par des portions verticales métalliques. Ainsi, en faisant passer les efforts par les portions verticales métalliques de grande raideur, les modules gagneraient en linéarité. Les couches en matériau viscoélastique ont un rôle auxiliaire, et ne sont sollicitées pour absorber les vibrations qu'en cas de grandes déformations des poutres.

Cependant, un tel module se révèle d'une grande raideur dans les directions latérales, le rendant insuffisant pour assurer une isolation latérale.

Le document US 7,249,756 s'intéresse également aux problèmes de non-linéarité des modules d'isolation. Il propose de rendre un module d'isolation efficace dans toutes les directions. A cet effet, le module comprend une portion centrale de flexion et deux boucles de flexion symétriques par rapport à la portion centrale. Sur chaque face de chaque boucle, une couche d'un matériau viscoélastique et une couche rigide, en métal, sont appliquées successivement. La portion centrale comprend en fait deux sections superposées, qui peuvent se déplacer l'une par rapport à l'autre aussi bien longitudinalement que latéralement. Ces déplacements se répercutent aux boucles, et plus précisément aux couches de matériau viscoélastique, qui se déforment en cisaillement à cause des couches rigides.

L'emploi de pièces métalliques permet de diminuer les problèmes liés aux comportements non linéaires. Toutefois, de même que précédemment, la souplesse latérale est très faible, en tout cas trop faible pour fournir une isolation latérale adéquate.

En outre, un tel module constitué d'un empilement de couches se révèle être une structure complexe. Les coûts s'en trouvent augmentés. En outre, une telle structure est volumineuse et lourde, ce qui est fortement indésirable dans le domaine de satellites où l'encombrement et le poids doivent être minimaux. De plus, l'emploi des couches métalliques implique nécessairement l'emploi des couches en matériau viscoélastique pour apporter de l'amortissement, introduisant nécessairement de la non-linéarité.

Le document FR2895052, considéré comme l'art antérieur le plus pertinent, décrit un module selon le préambule de la revendication 1.

Il existe un besoin pour un nouveau module d'isolation apportant notamment une solution aux inconvénients précités.

Ainsi, un premier objet de l'invention est de proposer un nouveau module d'isolation dont les comportements non-linéaires sont diminués.

Un deuxième objet de l'invention est de proposer un nouveau module d'isolation conservant des dimensions et un poids acceptables pour une application au domaine des satellites.

Un troisième objet de l'invention est de proposer un nouveau module d'isolation ayant une bonne tenue mécanique.

Un quatrième objet de l'invention est de proposer un nouveau module d'isolation dont le comportement est aisé à prédire.

Un premier aspect de l'invention est de proposer un module d'isolation entre un dispositif générateur de vibrations, tel qu'un lanceur pour satellite, et une structure à isoler, telle que la structure porteuse d'un satellite. Le module comprend :

- au moins deux pièces de fixation destinées à être fixés respectivement au dispositif générateur de vibrations et à la structure à isoler,
- des moyens de liaison en matière élastomère interposés entre les deux pièces de fixation, autorisant au moins un degré de liberté en translation selon un axe (X) longitudinal entre les deux pièces de fixation,

Une première pièce de fixation, appelée cadre, comprend au moins deux branches radiales parallèles, à distance l'une de l'autre selon l'axe longitudinal. La deuxième pièce de fixation, appelée support, comprend au moins une branche radiale s'étendant entre les deux branches du cadre. Les deux branches radiales du cadre sont symétriques l'une de l'autre par rapport à un plan perpendiculaire à l'axe longitudinal.

Les moyens de liaison en matière élastomère comprennent au moins un couple de plots en élastomère identiques, dans lequel chaque plot s'étend selon l'axe longitudinal entre une première extrémité et une deuxième extrémité. Ainsi, un premier plot a sa première extrémité en appui sur une première branche radiale du cadre et sa deuxième extrémité en appui sur la branche radiale du support. Le deuxième plot a sa première extrémité en appui sur la deuxième branche radiale du cadre et la deuxième extrémité en appui sur la branche radiale du support. Les deux plots du couple sont ainsi montés en parallèle entre le cadre et le support et sont actifs selon l'axe longitudinal dans des sens opposés, de sorte que lorsqu'un plot travaille en traction, l'autre plot du couple travaille en compression et inversement.

Il en résulte que la raideur du module est symétrique selon qu'une force selon l'axe longitudinal qui lui est appliquée est orientée dans une direction ou son opposée.

Le module présente alors un comportement symétrique, permettant de diminuer la non-linéarité, éventuellement à l'aide de dispositions supplémentaires.

Chaque plot est alors dimensionné de sorte que la surface de contact d'une extrémité en contact avec une branche et la surface libre de contact respecte la relation :

$$\frac{S_1}{S_2} \le 3.$$

Avantageusement, l'ensemble formé par les deux pièces de fixation en parallèle présente une raideur relative comprise entre 5 % et 30 % de la raideur totale du module.

La raideur relative peut être apportée par une seule des deux pièces de fixation, l'autre pièce de fixation étant considérée infiniment rigide.

En plus de diminuer le comportement non-linéaire, une bonne tenue mécanique est assurée en choisissant la raideur relative comprise entre 20 % et 30 % de la raideur totale du module.

De préférence, le module comprenant une pluralité de couples de plots en élastomère.

Chaque pièce de fixation comprend une surface de fixation, apte à être en contact directement ou indirectement avec l'un ou l'autre du dispositif générateur de vibrations et de la structure à isoler, la surface de fixation du cadre étant parallèle à la surface de fixation du support.

Les surfaces de fixation des deux pièces de fixation peuvent être perpendiculaires à un axe de fixation parallèle à l'axe longitudinal. En variante, les surfaces de fixation des deux pièces de fixation sont perpendiculaires à un axe de fixation incliné par rapport à l'axe longitudinal. L'angle d'inclinaison de l'axe de fixation par rapport à l'axe longitudinal est par exemple de 40°.

De préférence, le lieu de fixation du cadre sur l'un ou l'autre du dispositif générateur de vibrations et de la structure à isoler et le lieu de fixation du support sur l'un ou l'autre de la structure à isoler et du dispositif générateur de vibrations sont alignés selon l'axe longitudinal. Par exemple, les surfaces de fixation comprennent des perçages dont les axes sont alignés.

Le cadre et le support peuvent présenter chacun un plan de symétrie longitudinal perpendiculaire à l'axe (**Y**) radial.

Selon un mode de réalisation, le cadre comprend deux branches supérieures dans le prolongement continu l'une de l'autre et deux branches inférieures, dans le prolongement continu l'une de l'autre. Le cadre comprend en outre une branche longitudinale s'étendant dans le plan de symétrie longitudinal, le cadre formant un H. Le support comprend deux branches médianes alignées, s'étendant l'une vers l'autre sans se rejoindre, le support formant un C, chacune des branches médianes s'étendant entre deux branches du cadre.

Selon un autre mode de réalisation, le cadre comprend deux branches inférieures dans le prolongement continu l'une de l'autre et deux branches supérieures dans le prolongement continu l'une de l'autre, s'étendant de part et d'autre de deux branches longitudinales. Les deux branches inférieures présentent une ouverture. Le support présente une forme en T, et comprend deux branches médianes s'étendant de part et d'autre d'une branche longitudinale centrale passant par l'ouverture du cadre, de sorte que les branches médianes s'étendent entre les branches du cadre.

Selon un deuxième aspect, l'invention propose une application d'un module d'isolation tel que présenté ci-dessus, dans lequel le dispositif générateur de vibrations est un lanceur pour satellite artificiel et la structure à isoler et la structure porteuse d'un satellite artificiel.

Par exemple, le lanceur de satellite comprend un anneau circulaire d'interface lanceur et dans laquelle la structure porteuse comprend un anneau circulaire d'interface satellite. Une pluralité de modules d'isolation est montée entre les anneaux d'interface. Le cadre de chaque module est fixé rigidement respectivement sur l'un ou l'autre de l'anneau d'interface lanceur ou de l'anneau d'interface satellite et le support de chaque module étant fixé rigidement respectivement sur l'un ou l'autre de l'anneau d'interface satellite ou l'anneau d'interface lanceur. Chaque module est disposé de sorte que son axe longitudinal est parallèle à l'axe longitudinal des autres modules.

Bien entendu, d'autres avantages et caractéristiques de l'invention apparaîtront à l'examen de la description détaillée d'exemples possibles de réalisation, présentée ci-après, et des figures ci-annexées sur lesquelles :

La figure 1 est une vue de côté d'un module d'isolation représenté schématiquement, selon un premier mode de réalisation,

La figure 2 est une vue tridimensionnelle d'un module d'isolation selon un deuxième mode de réalisation,

La figure 3 est une vue de côté du module de la figure 2,

La figure 4 est une vue de dessus du module de la figure 2,

La figure 5 est un diagramme illustrant, pour deux modules dont les caractéristiques sont différentes, l'évolution des déformations en fonction,

La figure 6 est une vue tridimensionnelle d'un module d'isolation selon un troisième mode de réalisation, les plots en élastomères étant omis,

Les figures 7 et 8 sont des vues de côté d'un module d'isolation non conforme à l'invention, respectivement dans deux états de contraintes différents,

La figure 9 est un diagramme relatif à la raideur du module des figures 7 et 8 en fonction de la déformation des plots,

Les figures 10 et 11 sont similaires à celles des figures 7 et 8 pour le module d'isolation de la figure 2,

La figure 12 est un diagramme similaire à celui de la figure 10 pour le module des figures 7 et 8,

La figure 13 illustre une variante du plot de la figure 2,

La figure 14 illustre un montage comprenant deux anneaux circulaire d'interface entre lesquels est montée une pluralité de modules de la figure 13,

La figure 15 est une vue de détail de la figure 14.

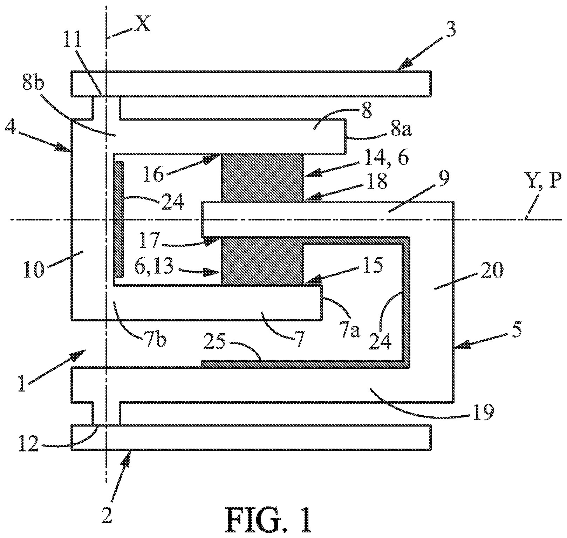

La figure 1 représente, de manière schématique, un module 1 d'isolation simplifié, prévu pour être monté entre un dispositif générateur de vibrations, et une structure à isoler. Par exemple, le module peut être monté à l'interface entre un anneau 2 d'interface satellite, fixé au lanceur, et un anneau d'interface 3 lanceur, fixé au satellite.

Le module 1 d'isolation comprend au moins deux pièces 4, 5, de fixation destinées à être fixées, directement ou indirectement par l'intermédiaire des anneaux 2, 3 d'interface, respectivement au dispositif générateur de vibrations et à la structure à isoler. Des moyens **6** de liaison en matière élastomère sont interposés entre les deux pièces 4, 5 de fixation, et autorisent au moins un degré de liberté en translation selon un axe **X** longitudinal entre les deux pièces 4, 5 de fixation.

De manière générale, une première pièce 4 est appelée cadre, et comprend au moins deux branches **7**, **8** radiales, c'est-à-dire s'étendant parallèlement à un axe **Y** radial du module 1. Les deux branches 7, 8 radiales du cadre 4 sont à distance l'une de l'autre selon l'axe X longitudinal.

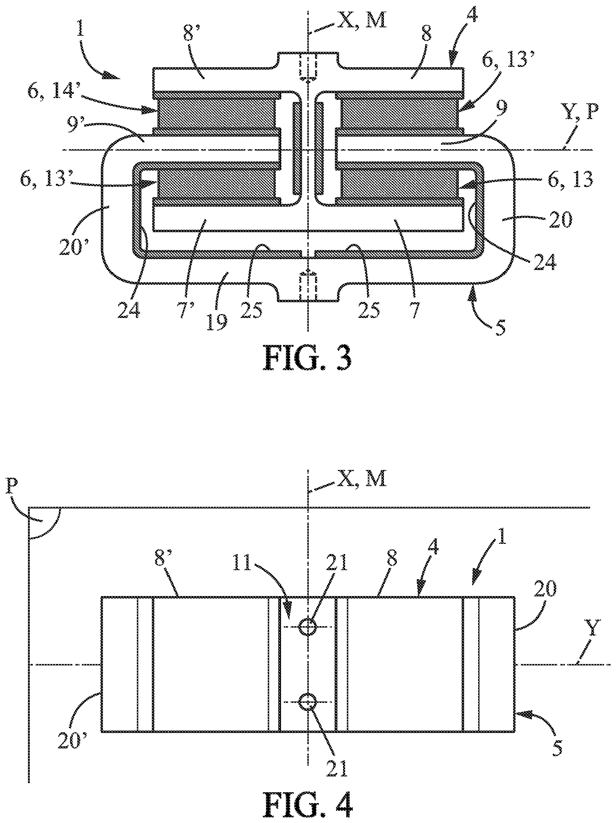

A des fins de simplification, mais sans que cela induise une quelconque limitation, une première branche 7 du cadre 4 est dite inférieure et la deuxième branche 8 est dite supérieure, en référence à l'orientation naturelles des figures 1 à 8, sur lesquelles l'axe X et l'axe vertical et l'axe Y est un axe horizontal.

Dans ce qui suit, l'adjectif « longitudinal » se rapporte à toute direction parallèle à l'axe X longitudinal et l'adjectif « radial » se rapporte à toute direction parallèle à l'axe Y radial.

La deuxième pièce 5 est appelée support, et comprend au moins une branche 9, dite médiane, qui s'étend entre les deux branches 7, 8 du cadre 4. Ainsi, dans un plan parallèle aux axes X et Y, tel que celui de la figure 1, on trouve successivement la branche 7 inférieure du cadre 4, la branche 9 médiane du support 5 et la branche 8 supérieure du cadre 4.

Le cadre 4 et le support 5 peuvent être réalisés dans tout matériau métallique ou alliage, par exemple en aluminium, en acier ou en titane, mais aussi dans des matériaux composites tels que le carbone ou le kevlar. Le cadre 4 peut être réalisé dans un matériau différent du support 5.

Les deux branches 7, 8 radiales du cadre 4 sont telles qu'elles sont symétriques l'une de l'autre par rapport à un plan **P** médian perpendiculaire à l'axe X longitudinal, la branche 9 médiane du support 5 s'étendant dans ce plan lorsque le module 1 est au repos, c'est-à-dire lorsqu'il n'est soumis à aucune contrainte. Ainsi, les branches 7, 8 radiales du cadre 4 sont symétriques en raideur, en déformation en traction et en compression. Plus précisément, comme cela est explicité plus loin, c'est-à-dire lorsque le module 1 est soumis à une force selon l'axe X longitudinal, dans une direction ou dans l'autre, les deux branches 7, 8 sont sollicitées de manière symétrique à elles-mêmes : une branche 7, 8 fléchit dans une direction lorsqu'une force dans une première direction selon l'axe X longitudinal est appliquée sur le module, et fléchit dans la direction opposée, de manière symétrique, lorsqu'une force dans l'autre direction selon l'axe X longitudinal est appliquée au module 1.

Les deux branches 7, 8 radiales du cadre 4 sont reliées par une branche **10** longitudinale. Chacune des deux branches 7, 8 radiales présentent alors une extrémité, respectivement 7a, 8a libre et une extrémité, respectivement 7b, 8b, encastrée sur la branche 10 longitudinale. Les extrémités 7a, 8a libres sont disposées symétriquement l'une par rapport à l'autre selon le plan P médian et les extrémités 7b, 8b encastrées sont disposées symétriquement l'une par rapport à l'autre selon le même plan P médian.

Chaque pièce, respectivement 4, 5, de fixation présente une surface, respectivement **11**, **12**, de fixation. Par exemple, la surface 11 de fixation du cadre 4 a pour vocation d'être appliquée contre une face de l'anneau 3 d'interface lanceur, fixé au satellite, et la surface 12 de fixation du support 5 a pour vocation d'être appliquée contre une face de l'anneau 2 d'interface satellite, fixé au lanceur. Par exemple, les pièces 4, 5 sont fixées par l'intermédiaire de visserie insérée au travers de la surface 11, 12 de fixation, et répartie régulièrement sur la surface 11, 12 de fixation. Les surfaces 11, 12 de fixation sont perpendiculaires à un même axe de fixation, qui peut être confondu, comme dans l'exemple de la figure 1 avec l'axe X longitudinal.

Les moyens 6 de liaison en matière élastomère comprennent au moins un couple de plots **13**, **14** en élastomère, et qui sont identiques, c'est-à-dire que chaque plot 13, 14 présente la même raideur en traction et la même raideur en compression. De préférence, la hauteur des plots 13, 14, c'est-à-dire leur dimension selon l'axe X longitudinal, est égale lorsque le module 1 n'est pas sollicité.

Chaque plot, respectivement 13, 14 s'étend selon l'axe X longitudinal entre une première extrémité, respectivement **15**, **16**, et une deuxième extrémité respectivement **17**, **18**. Un premier plot 13 a sa première extrémité 15 fixée rigidement à la branche 7 inférieure du cadre 4 et sa deuxième extrémité 17 fixée rigidement à la branche 9 médiane du support 5. De manière symétrique, le deuxième plot 13 a la première extrémité 16 fixée rigidement à la branche 8 supérieure du cadre 4 et la deuxième extrémité 17 fixée rigidement à la branche 9 médiane du support 5. Les plots 13, 14 sont ainsi montés en parallèle entre le cadre 4 et le support 5 et sont actifs selon l'axe X longitudinal dans des sens opposés. En d'autres termes, lorsqu'un plot 13, 14 travaille en traction, l'autre plot 14, 13 du couple travaille en compression, et inversement. De préférence, les plots 13, 14 du couple sont alignés l'un avec l'autre dans la direction longitudinale.

Selon l'exemple de la figure 1, les deux pièces 4, 5 sont sensiblement identiques, en forme de C. Le support 5 comprend alors une deuxième branche **19** radiale, appelée butée, et qui s'étend en vis-à-vis de la branche 7 inférieure du cadre 4, à une distance selon l'axe X longitudinal, de préférence inférieure à la hauteur des plots 13, 14. De même que pour le cadre 4, les branches, respectivement 9, 19, radiales du support 5 présentent une extrémité, respectivement 9a, 19a, libre et une extrémité, respectivement 9b, 19b, encastrée sur une branche **20** longitudinale. La surface 11 de fixation du cadre 4 est en saillie sur la branche 8 supérieure, et la surface 12 de fixation du support 5 est en saillie sur la deuxième branche 19 radiale. Les deux surfaces 11, 12 de fixation sont située chacune dans le prolongement de la branche 10 longitudinale du cadre 4. La butée 19 du support 5 n'est pas en contact avec des plots, mais peut venir en contact avec la branche 7 inférieure du cadre 4, par exemple en cas de choc, comme cela sera explicité plus loin.

On parle alors de symétrie en traction et en compression pour le module 1 ainsi formé car le module 1 se comporte de manière symétrique à lui-même selon qu'une force F longitudinale lui est appliquée dans une direction ou son opposé.

Plus précisément, lorsqu'une force F est appliquée selon l'axe X longitudinal, par exemple vers le bas selon la figure 1, c'est-à-dire sur le satellite et dirigé vers le lanceur, le cadre 4 se déplace selon l'axe X longitudinal, de sorte que la branche 7 inférieure du cadre 4 étire le premier plot 13, et la branche 8 supérieure comprime le deuxième plot 14 contre la branche 9 médiane: le premier plot 13 travaille en compression alors que le deuxième plot 14 travaille en traction. De plus, il en résulte que la branche 7 inférieure est sollicitée par le plot 14 comprimé et la branche 8 supérieure est sollicitée par le plot 13 étiré, de sorte que les deux branches 7, 8 subissent des efforts tendant à les faire fléchir dans la même direction longitudinale, en l'occurrence dans la direction opposée à celle de la force F.

Lorsqu'une force est appliquée sur le satellite 3 et dirigée dans la direction opposée, c'est-à-dire vers le haut sur la figure 1, alors la branche 7 inférieure du cadre 4 comprime le premier plot 13 contre la première branche 9 médiane du support 5, et la branche 8 supérieure étire le deuxième plot 14 : le premier plot 13 travaille en traction alors que le deuxième plot 14 travaille en compression. Il en résulte alors que c'est la branche 8 supérieure qui est sollicitée par le plot 13 comprimé, la branche 7 inférieure étant sollicitée par le plot 14 étiré. Les deux branches 7, 8 subissent des efforts tendant à les faire fléchir là encore dans la même direction longitudinale, dans la direction opposée à celle de la force F appliquée sur le module 1.

La structure du module 1 d'isolation ainsi formée, notamment avec les plots 13, 14 disposés en parallèle, et les branches 7, 8 radiales du cadre symétriques, assure que les efforts selon l'axe X longitudinal passent par les plots 13, 14, et les branches 7, 8 radiales du cadre 4, de sorte que le module 1 a un comportement symétrique quelque soit la direction de l'effort selon l'axe X longitudinal appliqué sur le module 1. Plus précisément, c'est la raideur du module 1 qui est symétrique selon qu'une force longitudinale appliquée au module est orientée dans une direction ou son opposée.

Cependant, les plots 13, 14 ont un comportement non linéaire, inhérent à la nature même des élastomères qui les composent, et en particulier à leurs propriétés viscoélastiques. Plus précisément, la raideur d'un plot comprimé augmente tandis que raideur d'un plot étiré diminue. Le travail symétrique des plots 13, 14 en traction et en compression, grâce à la structure du module 1, permet de diminuer le comportement non linéaire. En effet, l'augmentation de la raideur du au plot comprimé est en partie contrebalancée par la diminution de la raideur du plot étiré. Le comportement du module 1 pour les applications dans le domaine envisagé des satellites est alors considéré comme linéaire, ou quasi-linéaire.

L'augmentation de la raideur d'un plot comprimé n'est en réalité pas totalement compensée par la diminution de la raideur d'un plot en traction. En effet, plus un plot est comprimé, plus l'effort à appliquer pour le comprimer davantage est important. Grâce à la conception symétrique du module 1, des dispositions supplémentaires peuvent avantageusement être mises en oeuvre pour renforcer la diminution de la non-linéarité.

Les plots 13, 14 étant montés en parallèle, leurs raideurs respectives s'additionnent. Il existe donc un seuil d'effort en compression à partir duquel un plot en matériau viscoélastique a un comportement fortement non linéaire à cause de l'augmentation de la raideur du plot comprimé qui n'est pas compensée par le plot étiré, de sorte que le comportement global du module 1 est inapproprié pour les applications aux satellites. En d'autres termes, plus les efforts appliqués au module 1 sont importants, plus les effets non linéaires se feront ressentir.

Afin de limiter le comportement non linéaire dans le module 1, les dimensions des plots 13, 14 sont choisies de sorte qu'ils présentent une forme écrasée selon l'axe X longitudinal. En effet, les effets non linéaires ont tendance à être d'autant plus importants que la vitesse de déformation des plots est importante. Or, la vitesse de déformation a quant à elle tendance à augmenter lorsque la hauteur du plot diminue. Ainsi, plus la hauteur d'un plot est importante, plus son comportement non linéaire sera diminué, c'est-à-dire que la plage de forces et de déplacement pour lesquels le comportement du module peut être considéré comme linéaire ou quasi linéaire est plus importante.

Cependant, la hauteur des plots 13, 14 doit en même temps permettre le déplacement relatif selon l'axe X longitudinal entre le cadre 4 et le support 5. Or, on l'a vu, plus un plot a une forme écrasée, plus sa raideur augmente, de sorte que la fonction d'isolation du plot est diminuée.

A partir de ces deux compromis, en notant S1 la surface d'un plot en contact avec l'une ou l'autre des branches 7, 8 ou 9 des pièces 4 cadre ou 5 support, et S2 la surface libre du plot, il a été déterminé que les dimensions de chaque plot 13, 14 doivent satisfaire la relation suivante :

$$\frac{S_1}{S_2} \le 3 \qquad (1)$$

Lorsque les dimensions des plots respectent la relation (1), les effets non linéaires sont grandement diminués pour la plupart des applications relatives à l'isolation des satellites vis-à-vis de leur lanceur. Dans de telles applications, la composante de la force selon l'axe X longitudinal appliquée sur un module est en général comprise entre 20 000 N et 30 000 N (Newtons).

Selon un exemple, chaque plot 13, 14 se présente sous la forme d'un parallélépipède à base carré s'étendant selon l'axe X longitudinal, dont les côtés de la base font 60 mm (millimètres) et la hauteur, c'est-à-dire la dimension selon l'axe X longitudinal, est de 5 mm.

De préférence cependant, les dimensions de chaque plot 13, 14 satisfont à la relation suivante :

$$\frac{S_1}{S_2} \leq 1{,}6 \qquad\qquad (2)$$

La non-linéarité est alors réduite de manière significative pour les applications envisagées dans le domaine des satellites.

Par exemple, comme dans l'exemple précédent, chaque plot se présente se la forme d'un parallélépipède à base carré s'étendant selon l'axe X longitudinal, dont les côtés de la base mesurent 50 mm dans la direction selon l'axe Y transversal, 69 mm dans l'autre direction, et dont la hauteur est de 22 mm.

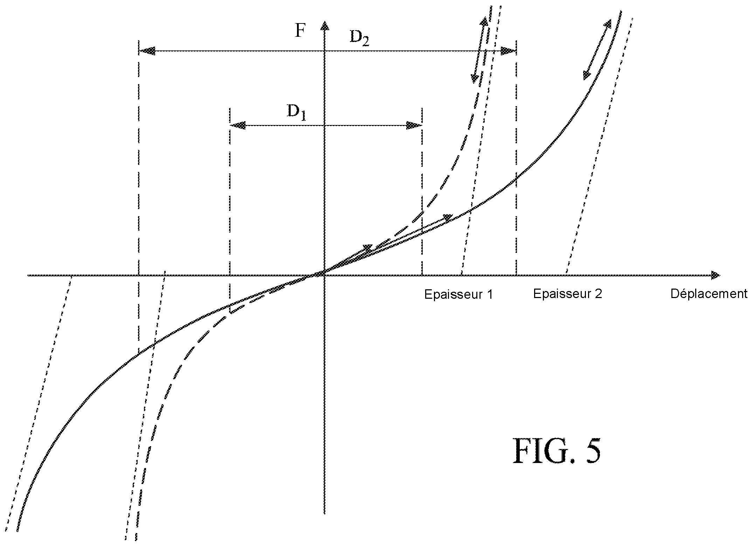

La figure 5 compare le comportement par le déplacement relatif des pièces 4, 5 de fixation en fonction d'une force F appliquée, pour deux modules ayant des plots de dimensions différentes, la courbe en traits discontinus concernant un premier module dont la hauteur h des plots est inférieure à celle d'un deuxième module concerné par la courbe en trait continu : le premier module ne respecte pas la relation (1), alors que le deuxième module la respecte.

Ainsi, pour le premier module, la plage **D1** des déplacements pour lesquels le comportement peut être assimilé linéaire, dite plage de linéarité, est inférieure à celle **D2** du deuxième module, celui selon l'invention.

Le comportement symétrique contribue à l'augmentation de la plage de linéarité. En effet, si le comportement n'est pas symétrique, alors le module ne se comporte pas de la même manière dépendamment de l'orientation des efforts selon l'axe X longitudinal qui lui sont appliqués, et la plage des déformations du module dans laquelle le comportement peut être considéré comme linéaire est réduite soit pour les déplacements dans un sens soit dans l'autre sens selon l'axe X longitudinal.

Afin de diminuer davantage encore le comportement non linéaire, le cadre 4 et le support 5 forment un ensemble pour lequel il est défini une raideur relative qui est comprise entre 5 % et 30 % de la raideur totale du module 1.

La raideur est une grandeur mesurée de manière classique à l'aide d'un dynamomètre ou d'une machine de traction. Un déplacement connu est imposé à la pièce dont on veut mesurer la raideur, et une cellule piézo-électrique ou des jauges de contraintes mesurent la force F nécessaire obtenir le déplacement.

Dans le cas des plots en élastomères, de raideur non constante, la courbe caractérisant l'évolution de la raideur se prédit par un logiciel aux éléments finis comme MARC ou ABAQUS. La raideur peut alors se définir comme le rapport d'une force sur un déplacement correspondant. Pour chaque plot, la raideur peut être définie pour une petite variation du déplacement et de la force autour d'un point de la courbe ou comme la raideur moyenne sur une pleine plage de déplacements et de forces.

Pour un module 1, la raideur $K_T$ totale correspond à la somme suivante :

$$\frac{1}{K_T} = \frac{1}{K_P} + \frac{1}{K_R} \qquad\qquad (3)$$

En effet, les plots 13, 14 étant en parallèle, leurs raideurs s'additionnent pour former la raideur $K_P$ représentative de la contribution des plots 13, 14 en élastomère à la raideur totale du module. Les pièces 4, 5 de fixation étant en série, l'inverse de leurs raideurs s'additionne pour former $K_R$ représentative de la contribution de l'ensemble 4, 5 de fixation à la raideur totale du module 1. Les plots 13, 14 sont montés en série avec le cadre 4 et le support 5, par exemple en métal, de sorte que ce sont les inverses de la raideur $K_P$ des plots d'une part et de la raideur $K_R$ de l'ensemble 4, 5 de fixation d'autre part qui s'additionnent pour donner l'inverse de la raideur $K_T$ totale. En d'autres termes, le module 1 peut être modélisé comme deux ressorts en série, un premier ressort de raideur $K_P$ et un deuxième ressort de raideur $K_R$.

La raideur $K_R$ des pièces 4, 5 est alors définie comme étant la raideur relative.

Ainsi, par exemple, lorsque la raideur $K_R$ relative est considérée comme contribuant à 20% de la raideur $K_T$ totale, on obtient $K_R = \dfrac{K_T}{0{,}2}$.

En d'autres termes, en reprenant la formule (3), on obtient que la raideur $K_T$ totale équivaut à (1- 0,2) $\times$ $K_P$, ou encore que la raideur $K_P$ des plots vaut 1,25 $\times$ $K_T$. Ainsi, les plots 13, 14 sont 25% plus raides que le module 1 complet.

Ainsi, dans cet exemple, pour une raideur $K_T$ totale de 2 000 N/mm (Newton par millimètres), la raideur $K_P$ des plots 13, 14 est de 2 500 N/mm et la raideur $K_R$ relative est de 10 000 N/mm.

En ajustant la raideur $K_R$ relative de l'ensemble de fixation formé par le cadre 4 et le support 5, le comportement non linéaire peut être encore diminué davantage. Par exemple, la raideur relative de l'ensemble 4, 5 de fixation peut être ajustée en utilisant un matériau pour le cadre 4 d'une rigidité très supérieure à celle du support 5, de sorte que seul le support 5 se déforme substantiellement lorsque le module 1 est soumis à des efforts : la raideur du cadre 4 est considérée comme infinie. La raideur du support 5 peut en outre être ajustée en contrôlant la longueur, c'est-à-dire la dimension radiale, de la branche 9 médiane du support 5, ainsi que l'épaisseur, c'est-à-dire la dimension radiale, de la branche 20 longitudinale. En effet, plus la longueur de la branche 9 médiane est importante, plus elle pourra être fléchie selon l'axe X longitudinal. En outre, plus l'épaisseur de la branche 20 longitudinale est importante, plus sa raideur est importante, de manière à limiter les déformations du support 5 ailleurs que par la branche 9 médiane. Ainsi, lorsque le module 1 est soumis à une force qui comprime l'un ou l'autre des plots 13, 14, du couple, la branche 9 médiane du support 5 peut fléchir pour éviter que le comportement non linéaire du plot comprimé ne devienne trop important pour les applications relatives à l'isolation d'un satellite installé sur un lanceur et qui sont celles principalement envisagées ici.

Cependant, afin d'assurer une bonne tenue mécanique du module, la raideur $K_R$ relative de l'ensemble 4, 5 de fixation doit être suffisante pour notamment éviter des déformations trop importantes du module 1, ce qui résulteraient en des contraintes sur le satellite et / ou le lanceur pouvant les endommager. Ainsi, de préférence, la raideur relative de l'ensemble formé par le cadre 4 et le support 5 est comprise entre 20% et 30% de la raideur $K_T$ totale du module 1.

Ainsi, lorsque le seuil d'effort en compression d'un des plots 13, 14 est atteint, le module 1 peut encore se déformer dans la direction de la compression du plot en question par la déformation de la branche 9 médiane du support 5.

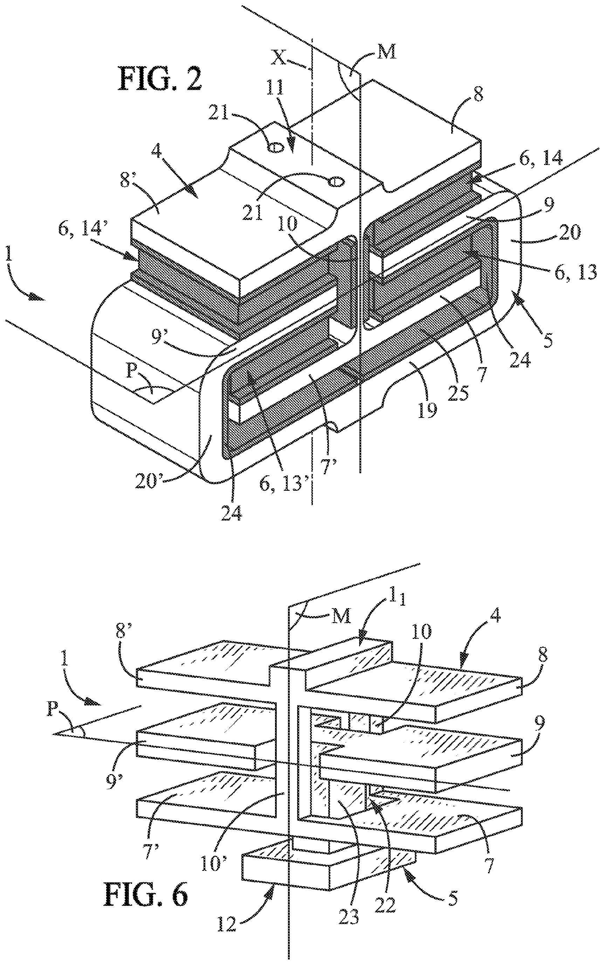

Sur la figure 2, il est représenté un module 1 d'isolation selon un deuxième mode de réalisation.

Le module 1 du deuxième mode de réalisation correspond à deux modules 1 du premier mode de réalisation dont la branche 10 longitudinale du cadre 4 aurait été mise en commun. En d'autres termes, le module 1 du deuxième mode de réalisation présente un plan **M** symétrie perpendiculaire à l'axe Y radial, la branche 10 longitudinale du cadre 4 s'étendant dans ce plan M. Les mêmes éléments que ceux décrits en référence à la figure 1 sont désignés ici par les mêmes références, augmentés d'un « ' » pour désigner leur symétrique par rapport au plan M.

Le second mode de réalisation présente notamment l'avantage de ne pas générer de couple dans les moyens de fixation des deux pièces 4, 5 de fixation.

Selon le deuxième mode de réalisation, le cadre 4 se présente sous la forme d'un H, et comprend deux branches 7, 7' inférieures, dans le prolongement continu l'une de l'autre, s'étendant respectivement de part et d'autre de la branche 10 longitudinale.

De même, le cadre 4 comprend deux branches 8, 8' supérieures, dans le prolongement continu l'une de l'autre, et s'étendant également respectivement de part et d'autre de la branche 10 longitudinale. Les branches 7, 7' inférieures sont alors toujours symétriques des branches 8, 8' supérieures du cadre selon un plan P médian perpendiculaire à l'axe X longitudinal.

Le support 5 se présente quant à lui sous la forme d'un C, venant s'imbriquer entre les branches 7, 7' et 8, 8' radiales du cadre 4. Plus précisément, le support 5 comprend deux branches 9, 9' médianes, qui s'étendent l'une vers l'autre sans se rejoindre, et deux branches 20, 20' longitudinales prolongées par la butée 19, refermant le C du support 5. Les branches 9, 9' médianes s'étendent dans le plan P médian lorsque le module 1 est au repos.

Le module 1 comprend alors deux couples de plots 13, 14 et 13', 14', à savoir un premier couple de plots 13, 14 fixés en parallèle aux branches 7, 8 radiales du cadre 4 et à une première branche 9 médiane du support 5 situés d'un même côté de la branche 10 longitudinale, et un deuxième couple de plot 13', 14' fixés en parallèle aux autres branches 7', 8' radiales du cadre 4 et à l'autre branche 9' médiane du support 5 situés de l'autre côté de la branche 10 longitudinale.

Les surfaces 11, 12 de fixation sont centrées avec la branche 10 longitudinale du cadre 4. Plus précisément, la surface 11 de fixation du cadre 4 est en saillie sur les branches 7, 7' inférieures et la surface 12 de fixation du support 5 est en saillie sur la butée 19 du support 5. Les surfaces de fixation 11, 12 comprennent des perçages 21, dont les axes sont parallèles avec l'axe X longitudinal, et passent par le plan M de symétrie dans lequel la branche 10 longitudinale s'étend. Ainsi, lorsqu'un effort est appliqué selon l'axe X longitudinal, il est transmis de manière égale de part et d'autre de la branche 10 longitudinale du cadre 4, de sorte que les moyens de fixation des pièces 4, 5 de fixation ne sont pas ou peu soumises à un couple.

De manière générale, le module 1 peut comprendre une pluralité de couple de plots, les plots de chaque couple étant montés en parallèle, de manière à toujours avoir, pour chaque couple de plots, un plot en traction et un plot en compression lorsque le module 1 est sollicité.

Le module 1 est obtenu par exemple en recouvrant le cadre 4 et le support 5 d'un adhésif destiné à adhérer à l'élastomère des plots. Plus précisément, au moins les faces des branches 7, 8 radiales destinées à être fixées aux premières extrémités 15, 16 des plots 13, 14 et les faces de la branche 9 médiane du support destinées à être fixées aux deuxièmes extrémités 17, 18 des plots 13, 14 sont recouvertes de cette adhésif. Le cadre 4 et le support 5 sont placés dans un moule dont la température est contrôlée, par exemple portée à 150°C. L'élastomère est injecté dans le moule puis est vulcanisé. L'adhésif réagit avec l'élastomère pour assurer la fixation.

En variante, l'axe X longitudinal peut être un axe de symétrie de révolution. Le module 1 présente alors une configuration dite axisymétrique, les plots 13, 14 se présentant sous la forme d'anneaux, continus ou non, centrés sur l'axe X longitudinal.

La figure 6 illustre un troisième mode de réalisation pour le cadre 4 et le support 5. Comme précédemment, les mêmes références désignent les mêmes éléments que ceux des premier et deuxième modes de réalisation.

Le cadre 4 comprend comme précédemment deux branches 7, 7' inférieures et deux branches 8, 8' supérieures, les branches 7, 7' inférieures étant symétriques des branches 8, 8' supérieures par rapport à un plan P médian perpendiculaire à l'axe X longitudinal. Le cadre comprend deux branches 10, 10' longitudinales, à la jonction entre les deux branches 7, 7' inférieures et les deux branches 8, 8' supérieures, de sorte que les deux branches 7, 7' inférieures et les deux branches 8, 8' supérieures s'étendent de part et d'autre des branches 10, 10' longitudinales. Les deux branches 10, 10' longitudinales sont disposées de part et d'autre des branches 7, 7', 8, 8' radiales selon une direction perpendiculaire à l'axe X longitudinal et à l'axe Y radial. Une ouverture **22** est formée entre les deuxièmes branches 8, 8'.

Le support 5 se présente sous la forme d'un T, et comprend deux branches 9, 9' médianes, et une branche **23** longitudinale centrale, de sorte que les branches 9, 9' médianes s'étendent de part et d'autre de la branche 23 centrale.

La branche 23 centrale du support 5 passe au travers de l'ouverture 22 dans la deuxième branche 14, 14' radiale du support, de sorte que les branches 9, 9' médianes du support s'étendent entre les branches 7, 7' et 8, 8' radiales du cadre 4.

Le cadre 4 et le support 5 peuvent alors avoir de mouvements relatifs selon l'axe X longitudinal.

Les paires de plots, non représentées sur la figure 6, sont montées comme précédemment, à savoir pour une première paire, un premier plot est monté entre une branche 7 inférieure du cadre 4 et une branche 9 médiane du support 5 et le deuxième plot est monté entre une branche 8 supérieure du cadre 4 et la même branche 9 médiane du support 5, et pour la deuxième paire, un premier plot est monté entre l'autre branche 7' inférieure du cadre 4 et l'autre branche 9' médiane du support 5 et le deuxième plot est monté entre l'autre branche 8' supérieure du cadre 4 et la même autre branche 9' médiane du support 5.

Ainsi, le module 1 selon le troisième mode de réalisation présente-t-il également une symétrie entre les branches 7, 7' inférieures d'une part et les branches 8, 8' supérieures d'autre part du cadre 4 par rapport à un plan perpendiculaire à l'axe X longitudinal, les branches 9, 9' médianes s'étendant dans ce plan lorsque le module 1 est au repos, c'est-à-dire non sollicité. Le module 1 du troisième mode de réalisation présente avantageusement, de même que pour le module 1 du deuxième mode de réalisation, un plan M de symétrie perpendiculaire à l'axe Y transversal, les branches 10, 10' longitudinales s'étendant dans ce plan M, pour diminuer le couple sur les moyens de fixation.

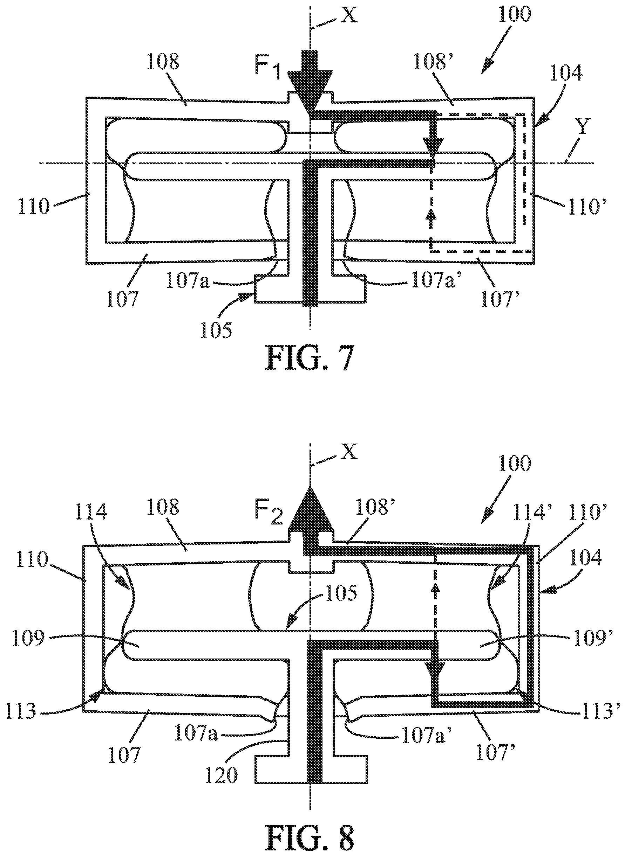

On a représenté sur les figures 7 et 8 un module 100 d'isolation proche de celui du deuxième mode de réalisation, mais ne présentant pas la symétrie requise : le module 100 des figures 7 et 8 correspond à deux modules 1 du premier mode de réalisation, symétriques selon la branche 20 longitudinale du support 5. Le cadre 104 présente alors deux branches 107, 107' inférieures et deux branches 108, 108' supérieures. Les deux branches 108, 108' sont dans le prolongement l'une de l'autre, de manière à former une unique branche dont les deux extrémités sont reliées à des branches 110, 110' longitudinales. Les branches 107, 107' inférieures s'étendent l'une vers l'autre chacune à partir d'une branche 110, 110' longitudinale, sans toutefois se rejoindre. Chaque branche 107, 107' inférieure présente alors une extrémité 107a, 107'a libre, un espace étant conservé entre ces deux extrémités 107a, 107'a. Or, les branches 108, 108' supérieures ne présentent pas d'extrémité libre. Le support 105 se présente sous la forme d'un T, dont la branche 120 longitudinale traverse l'espace entre les deux branches 107, 107' inférieures du cadre 104 de sorte que les branches 109, 109' médianes du support 5 s'étendent entre les branches 107, 107' inférieures et les branches 108, 108' supérieures du cadre 104. Ainsi, le module 100 des figures 7 et 8 présente un plan de symétrie perpendiculaire à l'axe Y radial, mais ne présente pas de plan de symétrie perpendiculaire à l'axe X longitudinal.

Sur la figure 7, on a représenté par des flèches le chemin des efforts dans le module 100 lorsqu'une force F1 selon l'axe X longitudinal est appliquée de sorte que les premiers plots 113, 113' sont en traction, c'est-à-dire étirés. Seul le chemin d'un côté du plan de symétrie du module 100 est représenté, le chemin de l'autre côté étant obtenu par symétrie. Les efforts empruntent préférentiellement le chemin de plus grande raideur. Or, dans le module 100, les efforts ont le choix entre deux chemins : soit passer par les plots, soit passer par le cadre 104. Les plots en compression présentant la raideur la plus élevée, les efforts font préférentiellement passer par les deuxièmes plots 114, 114' en compression. La flèche en trait plein de la figure 8 indique le chemin emprunté préférentiellement, par exemple par 70% des efforts totaux, et la flèche en traits discontinus indique le deuxième chemin, passant par le cadre 4.

On a représenté de la même manière sur la figure 8 le chemin emprunté par les efforts pour une force F2 appliquée au module 100 selon l'axe X longitudinal, dans l'autre direction, de sorte que ce sont les deuxièmes plots 114, 114' qui sont en traction.

Dans le cas où ce sont les deuxièmes plots114, 114' qui sont en compression (figure 7), les efforts passent principalement par les deuxièmes plots 114, 114' avant d'atteindre la branche 120 longitudinale du support 105.

Dans le cas où ce sont les premiers plots 113, 113' qui sont en compression (figure 8), les efforts vont passer principalement par les branches 110, 110' du cadre 104.

Ainsi, le chemin des efforts n'est pas symétrique dépendamment de la direction de la force F1 ou F2 appliquée sur le module 100 selon l'axe X longitudinal, et ce notamment à cause de l'absence de symétrie entre les branches 107, 107', 108, 108' radiales du cadre 104 par rapport à un plan perpendiculaire à l'axe X longitudinal.

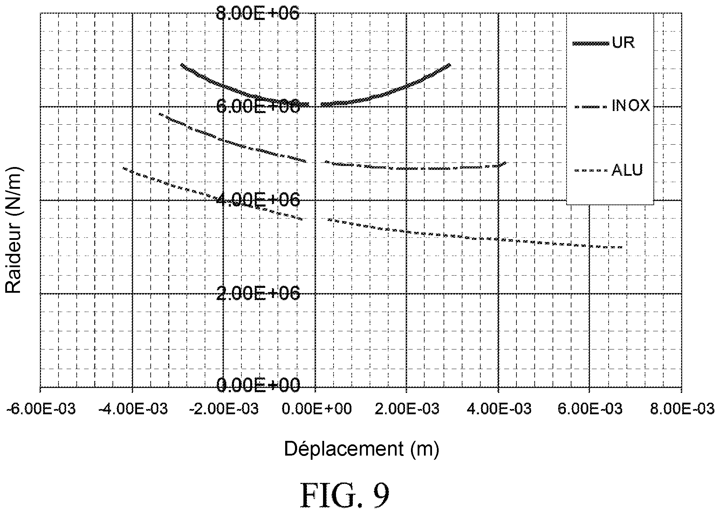

La figure 9 illustre cette absence de symétrie pour trois différents matériaux métalliques composant le cadre 4 et le support 5, c'est-à-dire pour des raideurs différentes :

- UR : acier considéré comme infiniment rigide,

- ALU : aluminium,

- INOX : acier inoxydable.

Pour chacun des trois matériaux employés, il est mesuré l'évolution de la raideur (en N/m) en fonction du déplacement relatif du cadre 104 par rapport au support 105.

La raideur évolue de manière non symétrique, et ce d'autant plus que le matériau utilisé est de faible raideur.

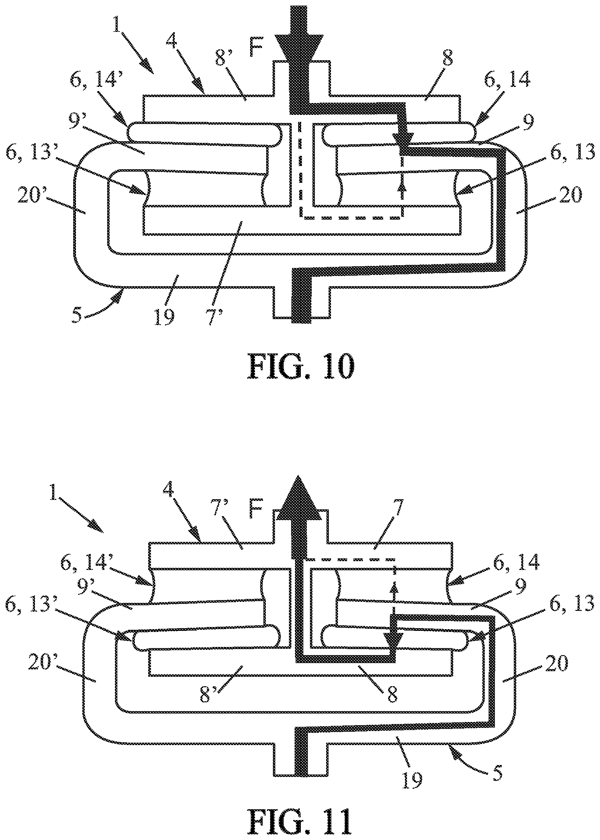

Les figures 10 et 11 sont similaires aux figures 7 et 8, pour un module 1 selon le deuxième mode de réalisation. Comme dans les figures 7 et 8, on a représenté sur la figure 10 le chemin principal en trait plein et le chemin secondaire en trait discontinu des efforts lorsque les premiers lots 13, 13' sont en traction et sur la figure 11 lorsque les deuxièmes plots 14, 14' sont en traction.

Dans les deux cas, les efforts empruntent principalement le chemin passant par les branches 20, 20' longitudinales du support 5. Ainsi, le chemin des efforts dans un cas est sensiblement symétrique de celui de l'autre cas.

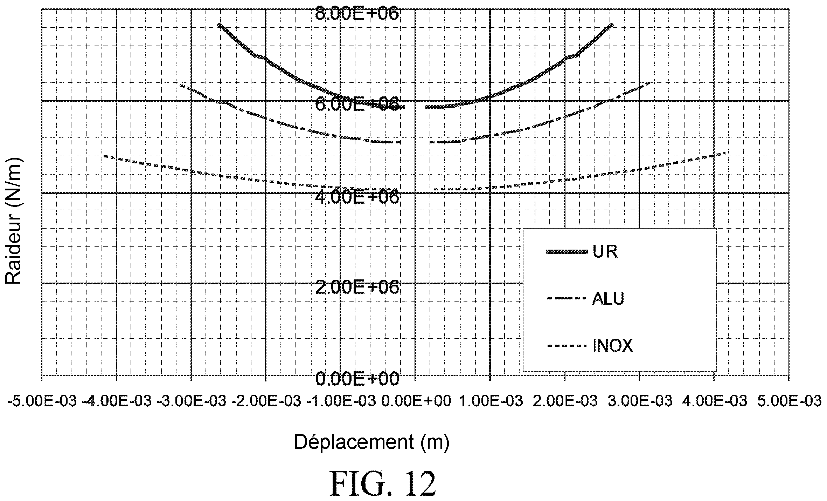

Ce résultat est illustré sur le diagramme de la figure 12, qui illustre le comportement symétrique du module 1 pour les trois mêmes matériaux que ceux utilisés pour le diagramme de la figure 9 : quelque soit la raideur $K_T$ totale du module 1, la raideur évolue de manière symétrique quelque soit la direction du déplacement selon l'axe X longitudinal.

Ainsi, la combinaison de la symétrie du comportement du module 1 et du choix des dimensions des plots en élastomères permet de diminuer les effets non linéaires.

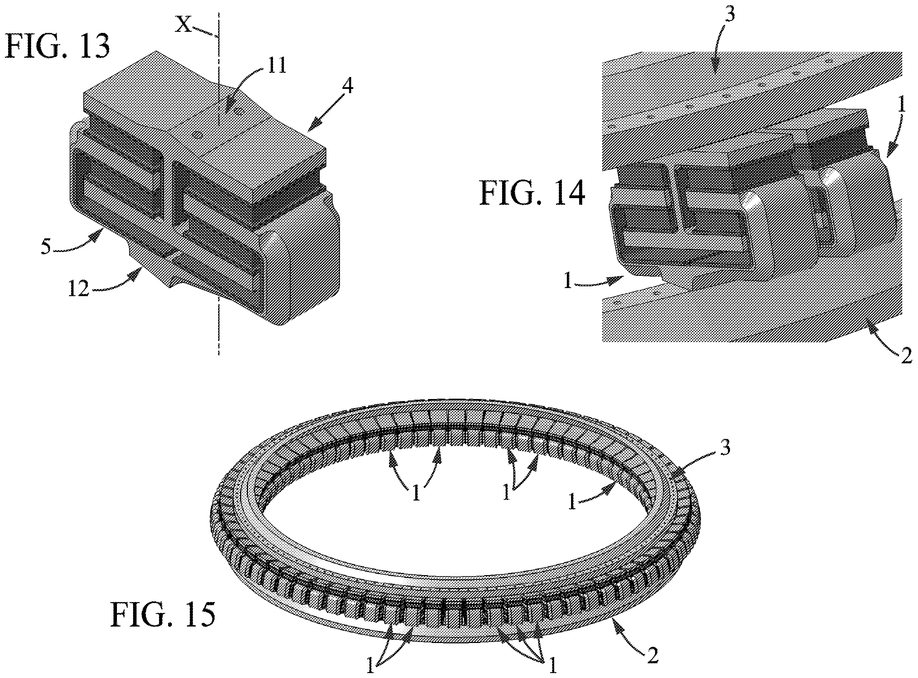

Selon une variante, illustrée sur la figure 13 notamment, l'axe de fixation, perpendiculaire aux surfaces 11, 12 de fixation du module 1, sont inclinées par rapport à l'axe X longitudinal. Cependant, l'axe des perçages 22 demeurent tous parallèles entre eux pour minimiser les contraintes sur les fixations. Par exemple, l'axe de fixation est incliné de 40° par rapport à l'axe X longitudinal.

Le module ainsi obtenu présente alors un plan de symétrie géométrique, perpendiculaire à l'axe Y radial, passant par les branches 10, 10' longitudinales du cadre 4.

La description ci-dessus s'attarde aux seules déformations selon l'axe X longitudinal.

Cependant, les plots 13, 14 autorisent également des déplacements relatifs du cadre 4 et du support 5 dans les directions perpendiculaires à l'axe X longitudinal. Le travail en cisaillement des plots 13, 14 étant considéré comme linaire dans les applications envisagées. Afin d'amortir tout choc dans la direction Y radial du module 1, les surfaces du cadre 4 orientées vers le support 5 et / ou les surfaces du support 5 orientées vers le cadre 4, non porteuses de plots, sont recouvertes d'une couche 24 d'élastomère. Ainsi, lorsqu'une des pièces 4, 5 de fixation vient en butée contre l'autre pièce 5, 4 sous l'effet par exemple d'un choc selon la direction radiale, le choc est amorti.

Par ailleurs, la butée 19 du support 5 peut servir de butée en cas de grande déformation, c'est-à-dire en cas de déformation tellement importante qu'elle risque d'endommager les plots. On l'a vu, le module 1 est dimensionné de sorte que la distance entre la première branche 9 médiane du support 5 et chacune des branches 7, 8 radiales du cadre, 4, est inférieure à la distance entre la branche 7 inférieure du cadre 4 et la butée 19 du support 5, les distances étant considérées lorsque le module n'est pas sollicité.

La surface de la butée 19 est alors recouverte d'une couche **25** d'élastomère, de manière à amortir le contact entre la branche 7 inférieure du cadre 4 et la butée 19 du support.

En pratique, une pluralité de modules 1 sont installés entre l'anneau 2 d'interface lanceur et l'anneau 3 d'interface satellite. Les anneaux 2, 3 ont sensiblement le même diamètre. Les modules 1 sont disposés de telle manière que leur axe X longitudinal est parallèle à l'axe central des anneaux 2, 3, et leur axe Y radial est parallèle à l'axe radial des anneaux 2, 3. Les modules sont répartis à intervalle régulier sur tout le périmètre des anneaux. Ainsi, il n'est pas nécessaire de mettre en place des butées sur chaque module 1 selon la troisième direction, perpendiculaire aux axes X et Y, puisque pour un module, tout déplacement dans cette troisième direction résulte en un déplacement dans la direction radiale pour au moins un autre module 1.

De manière générale, le module 1 d'isolation présente une symétrie en traction et en compression, c'est-à-dire dépendamment de la direction de la force selon l'axe X longitudinal appliquée sur le module, qui est obtenue grâce à la disposition des plots 13, 13' et 14, 14' en parallèle et des branches 7, 7' et 8, 8' du cadre 4 par rapport à la ou les branches 9, 9' radiales du support 5. En effet, les déformations du module 1 sont symétriques selon que la force imposée sur le module selon l'axe X longitudinal est dirigée dans une direction ou l'autre, de sorte que la raideur évolue de la même manière.

Cette première disposition permet de préparer la diminution du comportement non linéaire des plots 13, 13', 14, 14' en élastomère.

Les plots 13, 13', 14, 14' sont alors dimensionnés selon la relation (1) pour diminuer le comportement non linéaire. Ainsi, la plage de fonctionnement du module 1 pour lequel le comportement peut être considéré comme linéaire est augmentée. L'ajustement de la raideur $K_R$ relative de l'ensemble formé par le cadre 4 et le support 5 permet de diminuer davantage les comportements non linéaires.

Les plots 13, 13', 14, 14' sont toujours montés pour fonctionne par couple, de sorte que lorsqu'un plot du couple est comprimé, l'autre plot est étiré. Le module 1 ne comporte pas de plot qui ne possède pas son symétrique.

Le module 1 ainsi formé permet, grâce à la diminution de son comportement non linéaire, de prévoir avec une précision accrue son comportement et de pourvoir être facilement adapté à des conceptions de lanceurs et de satellites différentes sans efforts.

Le module 1 peut facilement être monté entre deux anneaux d'interface de manière connue, et ne nécessite donc pas de développement de pièces supplémentaires.

## Revendications

1.  Module (**1**) d'isolation entre un dispositif (**2**) générateur de vibrations, tel qu'un lanceur pour satellite, et une structure (**3**) à isoler, telle que la structure porteuse d'un satellite, comprenant :

    - au moins deux pièces (**4**, **5**) de fixation destinées à être fixées respectivement au dispositif (**2**) générateur de vibrations et à la structure (**3**) à isoler,
    - des moyens (**6**) de liaison en matière élastomère interposés entre les deux pièces de fixation, autorisant au moins un degré de liberté en translation selon un axe (**X**) longitudinal entre les deux pièces de fixation,
    - une première pièce de fixation, appelée cadre (**4**), comprend au moins deux branches (**7**, **7'**, **8**, **8'**) radiales dites inférieure et supérieure parallèles, à distance l'une de l'autre selon l'axe (**X**) longitudinal, et la deuxième pièce de fixation, appelée support (**5**), comprend au moins une branche (**9**, **9'**) radiale dite médiane s'étendant entre les deux branches (**7**, **7'**, **8**, **8'**) du cadre (**4**), les deux branches (**7**, **7'**, **8**, **8'**) radiales du cadre (**4**) étant symétriques l'une de l'autre par rapport à un plan perpendiculaire à l'axe (**X**) longitudinal,
    - les moyens (**6**) de liaison en matière élastomère comprennent au moins un couple de plots (**13**, **13'**, **14**, **14'**) en élastomère identiques, dans lequel chaque plot (**13**, **13'**, **14**, **14'**) s'étend selon l'axe (**X**) longitudinal entre une première extrémité (**15**, **16**) et une deuxième extrémité (**17**, **18**), un premier plot (**13**, **13'**) ayant la première extrémité (**14**) en appui sur une branche (**7**, **7'**) inférieure du cadre (**4**) et la deuxième extrémité (**17**) en appui sur la branche (**9**) médiane du support (**5**), et le deuxième plot (**14**, **14'**) ayant la première extrémité (**16**) en appui sur la branche (**8**) supérieure du cadre (**4**) et la deuxième extrémité (**18**) en appui sur la branche (**9**) médiane du support (**5**), les deux plots (**13**, **13'**, **14**, **14'**) du couple étant ainsi montés en parallèle entre le cadre (**4**) et le support (**5**) et étant actifs selon l'axe (**X**) longitudinal dans des sens opposés, de sorte que lorsqu'un plot travaille en traction, l'autre plot du couple travaille en compression et inversement,
    - la raideur du module (**1**) étant symétrique selon qu'une force selon l'axe (**X**) longitudinal qui lui est appliquée est orientée dans une direction ou son opposée,
    le module étant **caractérisé en ce que**
    - chaque plot (**13**, **13'**, **14**, **14'**) est dimensionné de sorte que la surface (**S1**) de contact d'une extrémité (**15**, **16**, **17**, **18**) en contact avec une branche (**7**, **7'**, **8**, **8'**, **9**, **9'**) radiale et la surface (**S2**) libre de contact respectent la relation :

$$\frac{S_1}{S_2} \le 3.$$

2.  Module (**1**) d'isolation selon la revendication 1, dans lequel l'ensemble formé par les deux pièces (**4**, **5**) de fixation en parallèle présente une raideur (**$K_R$**) relative comprise entre 5 % et 30 % de la raideur (**$K_T$**) totale du module (**1**).

3.  Module (**1**) d'isolation selon la revendication 2, dans lequel la raideur relative est apportée par une seule des deux pièces (**4**, **5**) de fixation, l'autre pièce de fixation étant considérée infiniment rigide.

4. Module (**1**) d'isolation selon la revendication 2 ou la revendication 3, dans lequel la raideur (**K$_R$**) relative est comprise entre 20 % et 30 % de la raideur (**K$_T$**) totale du module (**1**).

5. Module (**1**) d'isolation selon l'une quelconque des revendications précédentes, comprenant une pluralité de couples de plots (**13**, **13'**, **14**, **14'**) en élastomère.

6. Module (**1**) d'isolation selon l'une quelconque des revendications précédentes, dans lequel chaque pièce (**4**, **5**) de fixation comprend une surface (**11**, **12**) de fixation, apte à être en contact directement ou indirectement avec l'un ou l'autre du dispositif (**2**) générateur de vibrations et de la structure (**3**) à isoler, la surface (**11**) de fixation du cadre (**4**) étant parallèle à la surface (**12**) de fixation du support (**5**).

7. Module (**1**) d'isolation selon la revendication 6, dans lequel les surfaces (**11**, **12**) de fixation des deux pièces (**4**, **5**) de fixation sont perpendiculaires à un axe de fixation parallèle à l'axe (**X**) longitudinal.

8. Module (**1**) d'isolation selon la revendication 6, dans lequel les surfaces (**11**, **12**) de fixation des deux pièces (**4**, **5**) de fixation sont perpendiculaire à un axe de fixation incliné par rapport à l'axe (X) longitudinal.

9. Module d'isolation selon la revendication 8, dans lequel l'angle ($\alpha$) d'inclinaison de l'axe de fixation par rapport à l'axe (X) longitudinal est de 40°.

10. Module (**1**) d'isolation selon la revendication 9, dans lequel le lieu de fixation du cadre (4), respectivement sur l'un ou l'autre du dispositif générateur de vibrations et de la structure à isoler et le lieu de fixation du support (5), respectivement sur l'un ou l'autre de la structure à isoler et du dispositif générateur de vibrations sont alignés selon l'axe (X) longitudinal.

11. Module (**1**) selon l'une quelconque des revendications précédentes, dans lequel le cadre (**4**) et le support (**5**) présentent chacun un plan de symétrie longitudinal perpendiculaire à l'axe (**Y**) radial.

12. Module selon la revendication 11, dans lequel le cadre (**4**) comprend deux branches (**7**, **7'**) inférieures dans le prolongement continu l'une de l'autre et deux branches (**8**, **8'**) supérieures, dans le prolongement continu l'une de l'autre et comprend une branche (**10**) longitudinale s'étendant dans le plan de symétrie longitudinal, le cadre (**4**) formant un H, et dans lequel le support (**5**) comprend deux branches (**9**, **9'**) médianes alignées, s'étendant l'une vers l'autre sans se rejoindre, le support (**5**) formant un C, chacune des branches (**9**, **9'**) s'étendant entre deux branches (**7**, **8**, **7'**, **8'**) du cadre (**4**).

13. Module selon la revendication 10, dans lequel le cadre (**4**) comprend deux branches (**7**, **7'**) inférieures dans le prolongement continu l'une de l'autre et deux branches (**8**, **8'**) supérieures dans le prolongement continu l'une de l'autre, s'étendant de part et d'autre de deux branches (**10**, **10'**) longitudinales, les deux branches (**8**, **8'**) inférieures présentant une ouverture (**22**), et dans lequel le support (**5**) présente une forme en T, et comprend deux branches (**9**, **9'**) médianes s'étendant de part et d'autre d'une branches (**23**) longitudinale centrale passant par l'ouverture (**22**) du cadre (**4**), de sorte que les branches (**9**, **9'**) médianes s'étendent entre les branches (**7**, **7'**, **8**, **8'**) du cadre (**4**).

14. Application d'un module (**1**) d'isolation selon l'une quelconque des revendications 1 à 13, dans lequel le dispositif (**2**) générateur de vibrations est un lanceur pour satellite artificiel et la structure (**3**) à isoler et la structure porteuse d'un satellite artificiel.

15. Application selon la revendication 14, dans laquelle le lanceur de satellite comprend un anneau (**2**) circulaire d'interface lanceur et dans laquelle la structure porteuse comprend un anneau (**3**) circulaire d'interface satellite, une pluralité de modules d'isolation étant montés entre les anneaux (**2**, **3**) d'interface, le cadre (**4**) de chaque module (**1**) étant fixé rigidement respectivement sur l'un ou l'autre de l'anneau (**2**) d'interface lanceur ou de l'anneau (**3**) d'interface satellite et le support (**5**) de chaque module (**1**) étant fixé rigidement respectivement sur l'un ou l'autre de l'anneau d'interface (**3**) satellite ou l'anneau d'interface (**2**) lanceur, chaque module (**1**) étant disposé de sorte que son axe (**X**) longitudinal soit parallèle à l'axe (**X**) longitudinal des autres modules.

**Patentansprüche**

1. Modul **(1)** zur Isolierung zwischen einer schwingungserzeugenden Vorrichtung **(2)**, wie beispielsweise eine Satellitenträgerrakete, und einer zu isolierenden Struktur **(3)**, wie beispielsweise der Tragstruktur eines Satelliten, umfassend:

   - zumindest zwei Befestigungsteile **(4, 5)**, die vorgesehen sind, an der schwingungserzeugenden Vorrichtung **(2)** bzw. an der zu isolierenden Struktur **(3)** befestigt zu sein,
   - Verbindungsmittel **(6)** aus elastomerem Material, die zwischen den beiden Befestigungsteilen angeordnet sind und zumindest einen translatorischen Freiheitsgrad entlang einer Längsachse **(X)** zwischen den beiden Befestigungsteilen zulassen,
   - wobei ein als Rahmen **(4)** bezeichnetes erstes Befestigungsteil zumindest zwei parallele radiale Zweige (**7**, **7'**, **8**, **8'**), die als oberer und unterer Zweig bezeichnet und entlang der Längsachse **(X)** voneinander beabstandet sind, umfasst und wobei das als Halterung **(5)** bezeichnete zweite Befestigungsteil zumindest einen sogenannten mittleren radialen Schenkel (**9**, **9'**) umfasst, der sich zwischen den beiden Zweigen (**7**, **7'**, **8**, **8'**) des Rahmens **(4)** erstreckt, wobei die beiden radialen Zweige (**7**, **7'**, **8**, **8'**) des Rahmens (4) in Bezug auf eine zur Längsachse **(X)** senkrechte Ebene symmetrisch zueinander sind,
   - wobei die Verbindungsmittel **(6)** aus elastomerem Material zumindest ein Paar identischer Puffer (**13**, **13'**, **14**, **14'**) aus Elastomer umfassen, wobei sich jeder Puffer (**13'**, **14**, **14'**) entlang der Längsachse **(X)** zwischen einem ersten Ende (**15**, **16**) und einem zweiten Ende (**17**, **18**) erstreckt, wobei von einem ersten Puffer (**13**, **13'**) das erste Ende **(14)** an einem unteren Zweig (**7**, **7'**) des Rahmens **(4)** anliegt und das zweite Ende **(17)** am mittleren Zweig **(9)** der Halterung **(5)** anliegt und wobei vom zweiten Puffer **(14')** das erste Ende **(16)** am oberen Zweig **(8)** des Rahmens **(4)** anliegt und das zweite Ende **(18)** am mittleren Zweig **(9)** der Halterung **(5)** anliegt, wobei die beiden Puffer (**13**, **13'**, **14**, **14'**) des Paar somit parallel zwischen dem Rahmen **(4)** und der Halterung **(5)** montiert und entlang der Längsachse **(X)** in entgegengesetzten Richtungen aktiv sind, sodass, wenn ein Puffer auf Zug arbeitet, der andere Puffer des Paars auf Druck arbeitet, und umgekehrt,
   - wobei die Steifigkeit des Moduls **(1)** symmetrisch ist, je nachdem, ob eine auf selbiges angewandte Kraft entlang der Längsachse **(X)** in eine Richtung oder in deren Gegenrichtung ausgerichtet ist,

   wobei das Modul **dadurch gekennzeichnet ist, dass**:

   - jeder Puffer (**13**, **13'**, **14**, **14'**) so dimensioniert ist, dass die Kontaktfläche **(S1)** eines mit einem radialen Zweig (**7**, **7'**, **8**, **8'**, **9**, **9'**) in Kontakt stehenden Endes (**15**, **16**, **17**, **18**) und die kontaktfreie Fläche **(S2)** folgendem Verhältnis entsprechen:

$$\frac{S_1}{S_2} \le 3 \, .$$

2. Modul **(1)** zur Isolierung nach Anspruch 1, wobei die durch die beiden parallelen Befestigungsteile **(4, 5)** ausgebildete Baugruppe eine relative Steifigkeit $(K_R)$ von 5 % bis 30 % der Gesamtsteifigkeit $(K_T)$ des Moduls **(1)** aufweist.

3. Modul **(1)** zur Isolierung nach Anspruch 2, wobei die relative Steifigkeit durch ein einziges der beiden Befestigungsteile **(4, 5)** bereitgestellt wird und das andere Befestigungsteil als unendlich steif betrachtet wird.

4. Modul **(1)** zur Isolierung nach Anspruch 2 oder Anspruch 3, wobei die relative Steifigkeit $(K_R)$ 20 % bis 30 % der Gesamtsteifigkeit $(K_T)$ des Moduls **(1)** beträgt.

5. Modul **(1)** zur Isolierung nach einem der vorangehenden Ansprüche, umfassend eine Mehrzahl von Pufferpaaren (**13**, **13'**, **14**, **14'**) aus Elastomer.

6. Modul **(1)** zur Isolierung nach einem der vorangehenden Ansprüche, wobei jedes Befestigungsteil (**4**, **5)** eine Befestigungsfläche (**11**, **12)** umfasst, die geeignet ist, direkt oder indirekt mit der schwingungserzeugenden Vorrichtung **(2)** oder der isolierenden Struktur in Kontakt zu stehen, wobei die Befestigungsfläche **(11)** des Rahmens **(4)** parallel zur Befestigungsfläche **(12)** der Halterung **(5)** ist.

7. Modul **(1)** zur Isolierung nach Anspruch 6, wobei die Befestigungsflächen (**11**, **12)** der beiden Befestigungsteile (**4**, **5)** senkrecht zu einer zur Längsachse **(X)** parallelen Befestigungsachse sind.

8. Modul **(1)** zur Isolierung nach Anspruch 6, wobei die Befestigungsflächen **(11**, **12)** der beiden Befestigungsteile **(4**, **5)** senkrecht zu einer in Bezug auf die Längsachse **(X)** geneigten Befestigungsachse sind.

9. Modul zur Isolierung nach Anspruch 8, wobei der Neigungswinkel (α**)** der Befestigungsachse in Bezug auf die Längsachse **(X)** 40° beträgt.

10. Modul **(1)** zur Isolierung nach Anspruch 9, wobei der Befestigungsort des Rahmens **(4)** an der schwingungserzeugenden Vorrichtung bzw. an der zu isolierenden Struktur und der Befestigungsort der Halterung **(5)** an der zu isolierenden Struktur bzw. an der schwingungserzeugenden Vorrichtung entlang der Längsachse **(X)** ausgerichtet sind.

11. Modul **(1)** nach einem der vorangehenden Ansprüche, wobei der Rahmen **(4)** und die Halterung **(5)** jeweils eine zur radialen Achse **(Y)** senkrechte Längssymmetrieebene aufweisen.

12. Modul nach Anspruch 11, wobei der Rahmen **(4)** zwei untere Zweige **(7**, **7')** in der fortlaufenden Verlängerung voneinander und zwei obere Zweige **(8**, **8')** in der fortlaufenden Verlängerung voneinander umfasst und einen sich in der Längssymmetrieebene erstreckenden Längsschenkel **(10)** umfasst, wobei der Rahmen **(4)** ein H ausbildet und wobei die Halterung **(5)** zwei fluchtende mittlere Zweige **(9**, **9')**, die sich zueinander erstrecken, ohne sich zu berühren, wobei die Halterung **(5)** ein C ausbildet, wobei sich jeder der Zweige **(9**, **9')** zwischen zwei Zweigen **(7**, **8**, **7'**, **8')** des Rahmens **(4)** erstreckt.

13. Modul nach Anspruch 10, wobei der Rahmen **(4)** zwei untere Zweige **(7**, **7')** in der fortlaufenden Verlängerung voneinander und zwei obere Zweige **(8**, **8')** in der fortlaufenden Verlängerung voneinander umfasst, die sich auf beiden Seiten der beiden Längsschenkel **(10**, **10')** erstrecken, wobei die beiden unteren Zweige **(8**, **8')** eine Öffnung **(22)** aufweisen und wobei die Halterung **(5)** eine T-Form aufweist und zwei mittlere Zweige **(9**, **9')** umfasst, die sich auf beiden Seiten eines zentralen Längsschenkels **(23)** durch die Öffnung **(22)** des Rahmens **(4)** verlaufend erstrecken, sodass sich die mittleren Zweige **(9**, **9')** zwischen den Zweigen **(7**, **7'**, **8**, **8')** des Rahmens **(4)** erstrecken.

14. Anwendung eines Moduls zur Isolierung **(1)** nach einem der Ansprüche 1 bis 13, wobei die schwingungserzeugende Vorrichtung **(2)** ein künstlicher Satellitenträger ist und die zu isolierende Struktur **(3)** die Tragstruktur eines künstlichen Satelliten ist.

15. Anwendung nach Anspruch 14, wobei die Satellitenträgerrakete einen kreisförmigen Trägerraketenverbindungsring **(2)** umfasst und wobei die Tragstruktur einen kreisförmigen Satellitenverbindungsring **(3)** umfasst, wobei eine Mehrzahl von Isoliermodulen zwischen den Verbindungsringen **(2**, **3)** montiert ist, wobei der Rahmen **(4)** jedes Moduls **(1)** starr am Trägerraketenverbindungsring **(2)** bzw. am Satellitenverbindungsring **(3)** befestigt ist und wobei die Halterung **(5)** jedes Moduls **(1)** starr am Satellitenverbindungsring **(3)** bzw. am Trägerraketenverbindungsring **(2)** befestigt ist, wobei jedes Modul **(1)** so angeordnet ist, dass seine Längsachse **(X)** parallel zur Längsachse **(X)** der anderen Module ist.

## Claims

1. Isolation module (**1**) between a vibration-generating device (**2**), such as a satellite launcher, and a structure (**3**) to be isolated, such as the structure carrying a satellite, comprising:

   - at least two fastening parts (**4**, **5**) intended to be fastened respectively on the vibration-generating device (**2**) and the structure (**3**) to be isolated,
   - connecting means (**6**) made from elastomer material interposed between the two fastening parts, allowing at least one degree of freedom in translation along a longitudinal axis (X) between the two fastening parts,
   - a first fastening part, called a frame (**4**) comprises at least two parallel radial branches (**7**, **7'**, **8**, **8'**) called lower and upper, at a distance from each other along the longitudinal axis (**X**), and the second fastening part, called the support (**5**), comprises at least one radial branch (**9**, **9'**) called the median branch, extending between the two branches (**7**, **7'**, **8**, **8'**) of the frame (**4**), the two radial branches (**7**, **7'**, **8**, **8'**) of the frame (**4**) being symmetrical with each other with respect to a plane perpendicular to the longitudinal axis (**X**),
   - the elastomer connecting means (**6**) comprise at least one pair of identical elastomer pads (**13**, **13'**, **14**, **14'**), in which each pad (**13**, **13'**, **14**, **14'**) extends along the longitudinal axis (**X**) between a first end (**15, 16**) and a second end (**17**, **18**), a first pad (**13**, **13'**) having the first end (**14**) supported on a lower branch (**7**, **7'**) of the frame (**4**) and the second end (**17**) supported on the median branch (**9**) of the support (**5**) and the second pad (**14**, **14'**) having the first end (**16**) supported on the upper branch (**8**) of the frame (**4**) and the second end (**18**) supported on the median branch (**9**) of the support (**5**), the two pads (**13**, **13'**, **14**, **14'**) of the pair being thus mounted in parallel between the frame (**4**) and the support (**5**) and being active along the longitudinal axis (**X**) in opposite directions, so that when one pad works under tension, the other pad of the pair works under compression, and vice-versa,

- the stiffness of the module (**1**) being symmetrical, whether a force applied thereto along the longitudinal axis (**X**) is oriented in one direction or the opposite direction,

the module being **characterized in that**

- each pad (**13**, **13'**, **14**, **14'**) is dimensioned so that the contact surface (**S1**) of one end (**15**, **16**, **17**, **18**) in contact with a radial branch (**7**, **7'**, **8**, **8'**, **9**, **9'**) and the free contact surface (**S2**) satisfy the relationship:

$$\frac{S_1}{S_2} \le 3$$

.

2. Isolation module (**1**) according to claim 1, in which the assembly formed by the two parallel fastening parts (**4**, **5**) has a relative stiffness ($K_R$) comprised between 5% and 30% of the total stiffness ($K_T$) of the module (**1**).

3. Isolation module (**1**) according to claim 2, in which the relative stiffness is contributed by a single one of the two fastening parts (**4**, **5**), the other fastening part being considered infinitely rigid.

4. Isolation module (**1**) according to claim 2 or claim 3, in which the relative stiffness ($K_R$) is comprised between 20% and 30% of the total stiffness ($K_T$) of the module (**1**).

5. Isolation module (**1**) according to any one of the preceding claims, comprising a plurality of pairs of elastomer pads (**13**, **13'**, **14**, **14'**).

6. Isolation module (**1**) according to any one of the preceding claims, in which each fastening part (**4**, **5**) comprises a fastening surface (**11**, **12**), suitable for placing in contact directly or indirectly with one or other of the vibration-generating device (**2**) and the structure (**3**) to be isolated, the fastening surface (**11**) of the frame (**4**) being parallel to the fastening surface (**12**) of the support (**5**).

7. Isolation module (**1**) according to claim 6, in which the fastening surfaces (**11**, **12**) of the two fastening parts (**4**, **5**) are perpendicular to a fastening axis parallel to the longitudinal axis (**X**).

8. Isolation module (**1**) according to claim 6, in which the fastening surfaces (**11**, **12**) of the two fastening parts (**4**, **5**) are perpendicular to a fastening axis that is inclined with respect to the longitudinal axis (**X**).

9. Isolation module according to claim 8, in which the angle of inclination ($\alpha$) of the fastening axis with respect to the longitudinal axis (X) is 40°.

10. Isolation module (**1**) according to claim 9, in which the fastening location of the frame (**4**) respectively on one or other of the vibration-generating device and the structure to be isolated and the fastening location of the support (**5**) respectively on one or other of the structure to be isolated and the vibration-generating device are aligned along the longitudinal axis.

11. Module (**1**) according to any one of the preceding claims, in which the frame (**4**) and the support (**5**) each have a longitudinal plane of symmetry perpendicular to the radial axis (**Y**).

12. Module according to claim 11, in which the frame (**4**) comprises two lower branches (**7**, **7'**) one within the continuous extension of the other and two upper branches (**8**, **8'**) one within the continuous extension of the other and comprises a longitudinal branch (**10**) extending in the longitudinal plane of symmetry, the frame (**4**) forming an H, and in which the support (**5**) comprises two aligned median branches (**9**, **9'**), one extending toward the other without meeting, the support (**5**) forming a C, each of the median branches (**9**, **9'**) extending between two branches (**7**, **8**, **7'**, **8'**) of the frame (**4**).

13. Module according to claim 10, in which the frame (**4**) comprises two lower branches (**7**, **7'**) one within the continuous extension of the other and two upper branches (**8**, **8'**) one within the continuous extension of the other, extending on either side of two longitudinal branches (**10**, **10'**), the two lower branches (**8**, **8'**) having an opening (**22**), and in which the support (**5**) is in the shape of a T, and comprises two median branches (**9**, **9'**) extending on either side of a central longitudinal branch (**23**) passing through the opening (**22**) of the frame (**4**) so that the median branches (**9**, **9'**) extend between the branches (**7**, **7'**, **8**, **8'**) of the frame (**4**).

14. Application of an isolation module (**1**) according to any one of claims 1 to 13, in which the vibration-generating device (**2**) is a launcher for an artificial satellite and the structure (**3**) to be isolated is the structure carrying an artificial satellite.

15. Application according to claim 14, in which the satellite launcher comprises a circular launcher interface ring (**2**) and in which the carrying structure comprises a circular satellite interface ring (**3**), a plurality of isolation modules being mounted between the interface rings (**2**, **3**), the frame (**4**) of each module (**1**) being rigidly fastened respectively on one or other of the launcher interface ring (**2**) or the satellite interface ring (**3**) and the support (**5**) of each module (**1**) being rigidly fastened respectively on one or other of the satellite interface ring (**3**) or the launcher interface ring (**2**), each module (**1**) being arranged so that its longitudinal axis (**X**) is parallel to the longitudinal axis (**X**) of the other modules.

FIG. 1

FIG. 2

FIG. 6

FIG. 3

FIG. 4

FIG. 5

FIG. 7

FIG. 8

FIG. 9

EP 3 063 429 B1

FIG. 10

FIG. 11

FIG. 12

FIG. 13

FIG. 14

FIG. 15

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 6199801 B
- US 7249756 B
- FR 2895052